Europäisches Patentamt

European Patent Office

Office européen des brevets

(11) Publication number: **0 058 669**
**B1**

(12) **EUROPEAN PATENT SPECIFICATION**

(45) Date of publication of patent specification: **28.11.84**

(51) Int. Cl.³: **A 01 K 97/14, A 01 K 81/04**

(21) Application number: **81901329.3**

(22) Date of filing: **08.05.81**

(86) International application number:
**PCT/FI81/00031**

(87) International publication number:
**WO 81/03107 12.11.81 Gazette 81/27**

(54) **FISHING DEVICE.**

(30) Priority: **09.05.80 FI 801503**

(43) Date of publication of application:
**01.09.82 Bulletin 82/35**

(45) Publication of the grant of the patent:
**28.11.84 Bulletin 84/48**

(84) Designated Contracting States:
**AT CH DE FR GB LI NL SE**

(56) References cited:
**NO-A- 63 952**
**US-A-1 776 680**
**US-A-3 579 894**

(73) Proprietor: **LEPPÄKUMPU, Erkki**
**Torikatu 5D 30**
**SF-11100 Riihimäki 10 (FI)**

(73) Proprietor: **VAINIKAINEN, Kyösti**
**Torikatu 5D 30**
**SF-11100 Riihimäki (FI)**

(72) Inventor: **LEPPÄKUMPU, Erkki**
**Torikatu 5D 30**
**SF-11100 Riihimäki 10 (FI)**
Inventor: **VAINIKAINEN, Kyösti**
**Torikatu 5D 30**
**SF-11100 Riihimäki (FI)**

(74) Representative: **Zipse + Habersack**
**Kemnatenstrasse 49**
**D-8000 München 19 (DE)**

Courier Press, Leamington Spa, England.

EP 0 058 669 B1

## Description

The object of the present invention is a fishing device according to the introductory part of claim 1.

In the previous art are known various fish forks for catching fish and/or for lifting fish aboard or landing it ashore. An ordinary fish fork consists of a shaft with two or more straight prongs at its end, wherein the prongs are provided with gripping barbs. The barbs are so big that the fish can be lifted up from the water hanging solely from the said barbs. Owing to the barbs the fish is often badly torn. This causes difficulties in the further handling of the fish, not to mention esthetic aspects as regards the preparing and serving of food. The barbs in the fish fork also prevent the use of the fish fork in the function of a sweep net, when the fish is caught with a net or some other fishing trap, for example a flyrod.

The Norwegian Patent publication No. 63952 introduces a fishing device comprising a prong at the end of a shaft and two resilient lifting hooks attached on opposite sides of the said prong. The lifting hooks are bent for form a V-shape so that when striking a fish they guide it to the middle prong. The sharpened peaks of the middle prong and of the lifting hooks have no barbs but sometimes it is difficult to remove a fish without tearing it from the fishing device by spreading out the lifting hooks because on the other hand the lifting hooks must be strong enough that heavier fishes may not come free unvoluntarily from the gear.

The US Patent Publication no. 2 864 196 introduces a fishing gear resembling the device presented in the aforementioned Norwegian publication. Here the prong at the end of the shaft has been replaced by a fork-like group of prongs, wherein the prongs are directed closer to each other towards their peaks. On both sides of the group of prongs are arranged the lifting hooks. As the device strikes the fish to be lifted, an auxiliary member together with a sleeve attached to it by a rod is moved away from the prongs. To the sleeve are connected the lifting hooks provided with lever arms, which lifting hooks now are hit from both sides of the prongs down into the sides of the fish.

The above described fishing gear suffers from its mechanical complexity. There are no barbs in the prongs, but the forked prongs may as well tear the fish while it is being hit by the gear. Moreover, in the low position of the lifting hooks the prongs reach beyond the hooks, so that for example during the transportation of the device the prongs are dangerous for people.

As a conclusion it can be stated that the fishing devices described in the above mentioned publications all are awkward to use and unsecure in operation.

The purpose of the present invention is to avoid the above mentioned drawbacks and to realize a fishing device which is simple to manufacture and to use and which does not unnecessarily tear the fish. This can be achieved by the characteristic features of the invention, which are enlisted in Patent Claim 1.

Among the advantages of the invention are the simplicity of its production and the facility of its use. The opening angle of the hooks can be adjusted by a shiftable collar. Thus the fishing device is suited for lifting both big and small fishes. Thanks to the collar, it is also easy to remove the fish from the device.

The tips of the lifting hooks and the prongs are preferably straight spikes, in which case the device does not unnecessarily tear the fish. The fish gets only three spike holes. The lifting hooks are bent so that their tips as well as the middle prong are protected, and consequently they do not form any kind of danger for people. The lifting hooks are also designed in such a fashion that they guide the fish towards the middle prong if the original blow has been hit slightly amiss.

The device can without difficulty also be used instead of a sweep net for lifting fish from example up from a net.

In the following the invention is explained in detail with reference to the appended drawing.

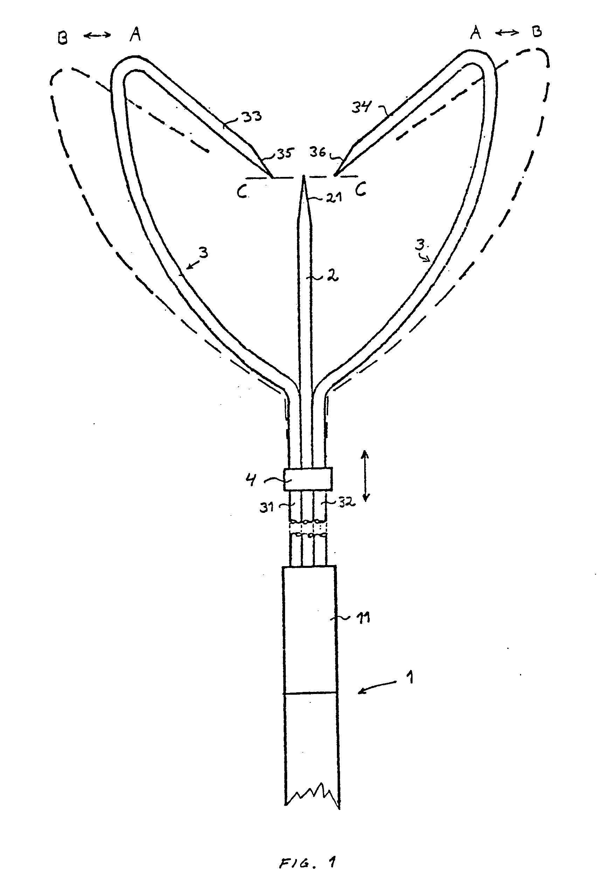

Figure 1 is a schematical view of one preferred embodiment of the invention.

The fishing device comprises the shaft 1, the middle prong 2 or equivalent as its continuation, and the two lifting hooks or prongs 3 located opposite to each other on both sides of the middle prong 2. The lifting hooks 3 are manufactured of resilient material such as strong steel wire or equivalent, and, together with the middle prong 2, attached firmly—for instance by welding—to the shaft, to which stem can be connected a shaft of any desirable length.

The lifting hooks 3 are bent to form a heart-like shape and the ends 33, 34 of the lifting hooks 3 together form a V-shaped or other similar guide, so that they guide the fish exactly to the middle prong during one blow.

The tip 21 of the middle prong 2 and the tips 35, 36 of the lifting hooks 3 can have the form of sharp spikes. In the ready-to-use position A the tips 21, 35 and 36 are preferably located in the same plane C—C, perpendicular to the middle prong 2. In the application presented in the drawing the tips 35 and 36 are sharpened in an inclined fashion, symmetrically with respect to the middle prong 2, the inclination taking place in a direction for increasing the angle in respect to said plane C—C.

The lifting hooks 3 have straight rod-members 31, 32, which are essentially parallel to the middle prong 2 and are attached to each other and to the middle prong by the positionally adjustable collar 4. By employing this collar 4 it is possible to adjust the size of the opening angle of the lifting hooks 3 and thus define their extreme position B. The nearer to the stem 11

2

of the shaft 1 the collar 4 is placed, the larger is the opening angle of the lifting hooks 3.

The fishing device according to the invention functions for example in the following manner. When, while taking up fishing nets from the water, near the boat is observed a fish which cannot be simply lifted up along with the net, the fishing device of the present invention is employed. The opening angle of the lifting hooks is adjusted according to the size of the fish by using the collar 4, and the fish is hit with the device. The V-guide ends 33, 34 formed by the lifting hooks 3 guides the fish exactly to the middle prong 2, because in most cases the blow hits slightly amiss. Consequently the middle prong 2 is pressed into the fish owing to the hitting power, and the lifting hooks 3 are bent sideways (A—B) for instance along the sides of the fish. Now a swift lifting movement is carried out, so that the ends 33, 34 of the lifting hooks 3 are pressed into the flesh of the fish and the fish cannot escape anymore. Thereafter the fish can be lifted in due order to the boat.

The fish is removed from the device by sliding the collar 4 down next to the stem 11 of the shaft 1, so that the lifting hooks 3 can without difficulty be drawn out of the sides of the fish, and the fish can be dropped from the middle prong onto the bottom of the boat or to a suitable vessel.

The fishing device according to the invention can be manufactured totally out of steel, either of rounded wire or rectangular bar, the diameter thereof being preferably 4—8 mm. The collar is suitably made of plastic or hard rubber. In order to prevent corrosion the steel parts can for example be chromium plated.

The middle prong 2 of the fishing device can, if desired, be formed of a plurality of two or more prongs. The middle prong 2 and the rod-members 31, 32 of the lifting hooks 3 can be connected to the stem 11 of the shaft 1 not only by welding but also by pressing them into the tubular stem.

In the above the invention has been explained mainly with reference to one preferred embodiment only. It is naturally clear that the invention is not limited solely to this one example, but it can be modified within the scope of the following patent claims. For example, the attaching of the middle prong 2 and the lifting hooks 3 to the shaft 1 can be carried out in many different ways, and the form of the lifting hooks 3 is relatively free; the essential features are the flexibility and the guiding properties of the lifting hooks. Moreover, the material of the fishing device can be chosen among a plurality of various different materials.

## Claims

1. A fishing device comprising a shaft (1), a middle prong (2) as a continuation of the shaft (1), and resilient lifting hooks or prongs (3) placed opposite to each other on either side of the said middle prong, which hooks (3) are firmly attached to the shaft (1) and bent so that their ends (33, 34) form a substantially V-shaped guide directed towards the tip (21) of the middle prong (2), characterized in that the lifting hooks (3) have straight rod-members (31, 32) essentially parallel in the region of their atttchment to the middle prong (2) and attached to each other and to the middle prong (2) by a collar (4) whose position is adjustable along the straight rod-members (31, 32) between the shaft (1) and the hooks (3) so that the resiliency of the hooks (3) is changeable (A—B).

2. The fishing device of claim 1, characterized in that starting from said straight rod-members (31, 32) the lifting hooks (3) are bent to form a heart-like shape.

3. The fishing device of claim 1 or 2, characterized in that when the device is ready to use (in position A) the tips (35, 36) of the lifting hooks (3) and the tip (21) of the middle prong (2) are substantially in the same plane (C—C), perpendicular to the longitudinal axis of the middle prong, and in that the lifting hooks are sharpened in an inclined fashion, the inclination taking place in a direction for increasing the included angle in respect to said plane (C—C).

4. The fishing device of any of the previous claims, characterized in that the middle prong (2) is formed of a group of two or more prongs.

5. The fishing device of any of the previous claims, characterized in that the prongs are manufactured of steel, either of rounded wire or rectangular bar, the diameter thereof being preferably 4—8 mm.

6. The fishing device of claim 5, characterized in that its steel parts are chromium plated as well.

7. The fishing device of claim 5 or 6, characterized in that the collar (4) is made of plastic or hard rubber.

## Revendications

1. Dispositif de pêche comprenant une hampe (1), une griffe médiane (2) prolongeant la hampe (1), et des crochets de levage ou griffes élastiques (3) disposés en face les uns des autres des deux côtés de la griffe médiane, ces crochets (3) étant fixés solidement sur la hampe (1) et courbés de telle façon que leurs extrémités (33, 34) forment un guidage ayant la forme générale d'un V dirigé vers la pointe (21) de la griffe médiane, caractérisé en ce que les crochets de levage (3) ont des membres en tige droite (31, 32), essentiellement parallèles à la griffe médiane (2) dans la région de leur fixation et liés les uns aux autres et à la griffe médiane par un collier (4) dont la position le long de ces membres en tige droite est réglable entre la hampe (1) d'une part et les crochets (3) de l'autre, ce qui permet de modifier l'élasticité des crochets (3) (A—B).

2. Dispositif de pêche selon la revendication 1, caractérisé en ce que, partant des membres en tige droite (31, 32), les crochets de levage sont recourbés pour former une configuration en forme de coeur.

3. Dispositif de pêche selon les revendications 1 ou 2, caractérisé en ce que, lorsque le dispositif est prêt à être utilisé (en position A), les pointes (35, 36) des crochets de levage (3) et la pointe (2) de la griffe médiane (2) se trouvent substantiellement dans le même plan (C—C) perpendiculaire à l'axe longitudinal de la griffe médiane, et en ce que les crochets de levage sont aiguisés d'une façon inclinée, l'inclinaison étant pratiquée dans une direction telle qu'elle permet d'agrandir l'angle inclus par rapport au plan (C—C).

4. Dispositif de pêche selon l'une des revendications précédentes, caractérisé en ce que la griffe médiane (2) est formée d'un groupe de deux ou plusieurs griffes.

5. Dispositif de pêche selon l'une quelquonque des revendications précédentes, caractérisé en ce que les griffes sont fabriquées en acier, soit en forme de fil de fer arrondi, soit en forme de barres rectangulaires dont le diamètre sera de préférence compris entre 4 et 8 mm.

6. Dispositif de pêche selon la revendication 5, caractérisé en ce que ses parties en acier peuvent être plaquées de chrome.

7. Dispositif de pêche selon les revendications 5 ou 6, caractérisé en ce que le collier (4) est réalisé en matière plastique ou en caoutchouc dur.

**Patentansprüche**

1. Angelvorrichtung mit einem Schaft (1), einer Mittelzinke (2) als eine Fortsetzung des Schaftes (1) und mit nachgiebigen Hebehaken oder Zinken (3) auf zueinander gegenüberliegenden Seiten der Mittelzinke, welche Haken (3) fest mit dem Schaft (1) verbunden und so gebogen sind, daß ihre Enden (33, 34) eine zur Spitze (21) der Mittelzinke (2) gerichtete, im wesentlichen V-förmige Führung bilden, dadurch gekennzeichnet, daß die Hebehaken (3) gerade Stabglieder (31, 32) aufweisen, die im Bereich ihrer Befestigung im wesentlichen parallel zur Mittelzinke (2) und miteinander sowie mit der Mittelzinke (2) durch einen Bund (4) verbunden sind, dessen Stellung längs der geraden Stabglieder (31, 32) zwischen dem Schaft (1) und dem Haken (3) einstellbar ist, so daß die Nachgiebigkeit der Haken (3) veränderbar ist (A—B).

2. Angelvorrichtung nach Anspruch 1, dadurch gekennzeichnet, daß ausgehend von den geraden Stabgliedern (31, 32) die Hebehaken (3) zu einer herzartigen Form gebogen sind.

3. Angelvorrichtung nach Anspruch 1 oder 2, dadurch gekennzeichnet, daß, wenn die Vorrichtung benutzungsbereit ist (in Stellung A), die Spitzen (35, 36) der Hebehaken (3) und die Spitze (21) der Mittelzinke (2) im wesentlichen in derselben Ebene (C—C) senkrecht zur Längsachse der Mittelzinke sind, und daß die Hebehaken in einer schrägen Weise angeschärft sind, wobei die Schräge in einer Richtung zur Vergrößerung des eingeschlossenen Winkels bezüglich der Ebene (C—C) verläuft.

4. Angelvorrichtung nach einem der vorhergehenden Ansprüche, dadurch gekennzeichnet, daß die Mittelzinke (2) aus einer Gruppe von zwei oder mehr Zinken gebildet ist.

5. Angelvorrichtung nach einem der vorhergehenden Ansprüche, dadurch gekennzeichnet, daß die Zinken entweder aus rundem oder aus rechtwinkligem Stahldraht gefertigt sind, dessen Durchmesser vorzugsweise 4—8 mm ist.

6. Angelvorrichtung nach Anspruch 5, dadurch gekennzeichnet, daß ihre Stahlteile auch chromplattiert sind.

7. Angelvorrichtung nach Anspruch 5 oder 6, dadurch gekennzeichnet, daß der Bund (4) aus Kunststoff oder Hartgummi besteht.

FIG. 1

1